# EUROPEAN PATENT APPLICATION

(11) **EP 2 276 093 A2**
(43) Date of publication of application: **19.01.2011**
(21) Application number: 10251279.5
(22) Date of filing: 16.07.2010
(51) Int. Cl.: H01M 2/30, H01M 2/34

(54) **Center-tapped battery and power distribution system for same**

(30) Priority: 16.07.2009 US 504181
(71) Applicant: Hamilton Sundstrand Corporation, Windsor Locks, CT 06096-1010 (US)
(72) Inventor: Cohen, Fred, Quartz Hill California 93536 (US); Lu, Cheng-Yi, West Hills California 91307 (US); Metcalf, Kenneth John, Simi Valley California 93065 (US)
(74) Representative: Tomlinson, Kerry John

(57) **Abstract**

A battery for a power distribution system includes a cell assembly having a positive terminal (14) and a negative terminal (16) that together provide a relative battery DC voltage. A neutral tap (12) is electrically connected to the cell assembly between the positive and negative terminals, splitting the voltage into positive and negative voltages. The positive terminal is at a positive DC voltage greater than the neutral tap. The negative voltage is at a negative DC voltage less than the neutral tap. The relative battery DC voltage is greater than each of the relative voltages between the neutral tap and each of the positive and negative DC voltages.

## Description

### BACKGROUND

This disclosure relates to a battery and power distribution system using a battery. More particularly, the disclosure relates to a battery for use in environments of varying pressures.

Batteries are used in an enormous variety of applications. A typical battery includes multiple cells arranged in a housing. A positive and ground terminal is provided on the housing that is electrically connected to the cells. The ground terminal provides ground or zero voltage, and the positive terminal provides a positive voltage relative to the ground. The differential between the ground terminal and positive terminal provides a desired relative voltage for a given application.

Paschen's Law provides that the voltage needed to arc between voltage terminals decreases as pressure is reduced. As a result, a battery used in a low pressure environment may be susceptible to arcing or shorting.

### SUMMARY

A battery for a power distribution system includes a cell assembly having a positive terminal and a negative terminal that together provide a relative battery DC voltage. A neutral tap is electrically connected to the cell assembly between the positive and negative terminals, splitting the voltage into positive and negative voltages. The positive terminal is at a positive DC voltage greater than the neutral tap. The negative voltage is at a negative DC voltage less than the neutral tap. The relative battery DC voltage is greater than each of the relative voltages between the neutral tap and each of the positive and negative DC voltages.

A power distribution system is disclosed that includes the battery described above. The neutral tap is grounded. An electrical component is electrically connected to the battery. A switch is movable between open and closed positions to selectively electrically connect at least one of the positive and negative terminals to the cell assembly. A switching device is coupled to the switch and is in communication with a controller.

A method of supplying DC voltage with a battery is disclosed. The battery provides positive and negative terminals corresponding to a voltage. The battery is center-tapped between the positive and negative terminals to provide a neutral corresponding to a ground. The voltage corresponds to the relative voltage between the positive and negative terminals.

These and other features of the disclosure can be best understood from the following specification and drawings, the following of which is a brief description.

### BRIEF DESCRIPTION OF THE DRAWINGS

Figure 1 is a schematic view of a center-tapped battery according to the disclosure.
Figure 2 is a schematic view of a power distribution system using the center-tapped battery shown in Figure 1.

### DETAILED DESCRIPTION

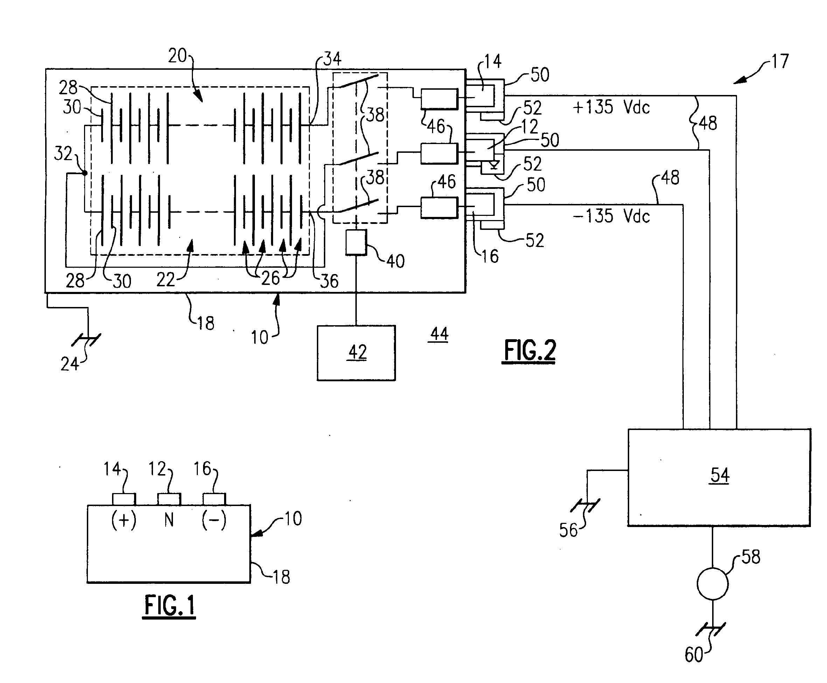

Figure 1 schematically depicts a center-tapped battery 10 according to one disclosed example. The battery 10 includes a neutral or ground terminal 12 and positive and negative terminals 14, 16. The relative voltage between the positive and negative terminals 14, 16 corresponds to a desired DC voltage. The positive terminal 14 is at a greater voltage than the neutral terminal or tap 12, and the negative terminal 16 is at a lesser voltage than the neutral terminal 12.

In one example, the potential to ground from each of the positive and negative terminals 14, 16 is half that of the relative voltage between the positive and negative terminals directly. For example, the relative voltage between the positive and negative terminals 14, 16 is approximately 270 volts DC. Thus, the positive terminal is at 135 volts DC, and the negative terminal is at -135 volts DC in the example.

The disclosed battery reduces the likelihood of a corona discharge and/or arcing that may occur at reduced pressures due to Paschen's Law. Applications in which the battery may be exposed to reduced pressures in its surrounding environment are, for example, aircraft, balloon, launch vehicles, aerospace and similar terrestrial to air applications.

The battery 10 is illustrated in an example power distribution system 17 in Figure 2. The battery 10 includes a battery enclosure 18, grounded at 24, that houses first and second cell assemblies 20, 22. In the example, each of the first and second cell assemblies 20, 22 includes multiple cells 26 that each include a positive and negative side 28, 30. The negative sides 30 of the first cell assembly 20 are electrically connected to a center-tapped connection 32. The positive sides 28 of the second cell assembly 22 are electrically connected to the center-tapped connection 32. The center-tapped connection 32 is electrically connected to the neutral terminal 12. The positive sides 28 of the first cell assembly 20 are oriented and electrically connected to the positive terminal 14. The negative sides of the second cell assembly 22 are oriented and electrically connected to the negative terminal 16.

In one example, switches 38 are arranged between the first and second cell assemblies 20, 22, the center-tap 32 and their respective positive and negative terminals 14, 16 and neutral terminal 12. A switching device 40 is interconnected to the switches 38. A controller 42 communicates with the switching device 40. In one example, the controller 42 is programmed to command the switching device 40 to actuate the switches 38 between open and closed positions. For example, in a launch vehicle application, the battery may be connected with the switches 38 in a closed position early in the launch sequence, on the ground, which is at a first pressure approximately at sea level. The battery 10 is continuously electrically connected to a load as the launch vehicle passes through the atmosphere. Thus, during the launch sequence, the environment 44 within which the battery is disposed is subject to a second pressure in the atmosphere that is less than the first pressure prior to launch. At low pressures, occurring in the upper atmosphere (for example, 80,000 - 90,000 feet (24 - 27 km)), a typical battery would be susceptible to arcing due to the decrease in pressure relative to sea level pressure.

Fuses, and/or filters 46 are electrically connected in between each switch 38 and its respective terminal 14, 16 in one example. Electrical leads 48 electrically interconnect the battery 10 with an electrical component 54. In one example, the electrical leads 48 include connectors 50 having fasteners 52 that are used to secure the ends of the electrical leads 48 to the terminals 12, 14, 16.

The electrical component 54 is grounded at a first ground 56. In some applications, a single point ground 58 may be used to ground digital and analog signals. The single point ground 58 is electrically connected to a second ground 60.

In one example, the electrical component 54 is an electromagnetic actuator (EMA). In another example, the electrical component 54 is an electrohydraulic actuator (EHA) that includes a controller that commands an electrically driven pump. In launch vehicle applications, the EMA and/or EHA is used to control the flight path of the launch vehicle, for example.

Although an example embodiment has been disclosed, a worker of ordinary skill in this art would recognize that certain modifications would come within the scope of the claims. For that reason, the following claims should be studied to determine their true scope and content.

## Claims

1. A battery for a power distribution system comprising:
a cell assembly having a positive terminal (14) and a negative terminal (16) that together provide a relative battery DC voltage; and
a neutral tap (12) electrically connected to the cell assembly between the positive and negative terminals, the positive terminal being at a positive DC voltage greater than the neutral tap and the negative terminal being at a negative DC voltage less than the neutral tap, the relative battery DC voltage being greater than each of the relative voltages between the neutral tap and each of the positive and negative DC voltages.

2. The battery according to claim 1, wherein the relative DC voltage is approximately equal to the difference between the positive and negative DC voltage.

3. The battery according to claim 1 or 2, comprising a battery enclosure (18) configured to provide a ground, the ground being electrically connected to the neutral tap (12).

4. The battery according to claim 3, wherein the cell assembly is arranged within the battery enclosure (18), and the positive and negative terminals (14, 16) are arranged external to the battery enclosure.

5. The battery according to any preceding claim; wherein the neutral tap (12) is located physically between the positive and negative terminals (14, 16).

6. The battery according to any preceding claim, comprising at least one fuse or filter electrically connected between at least one of the positive and negative terminals (14, 16).

7. The battery according to any preceding claim, comprising at least one switch (38) and a switching device (40), the switch being electrically connected between at least one of the terminals (12, 14, 16) and the cell assembly, the switching device being configured to move the switch between open and closed positions.

8. A power distribution system comprising:
a battery according to any of claims 1 to 6;
an electrical component (54) electrically connected to the battery;
a switch (38) movable between open and closed positions to selectively electrically connect at least one of the positive and negative terminals (14, 16) to the cell assembly; and
a switching device (40) coupled to the switch and in communication with a controller (42), the controller being programmed to command the switching device to actuate the switch between the open and closed positions.

9. The system according to claim 8, comprising electrical leads (48) electrically connecting the battery (10) to the electrical component (54).

10. The system according to claim 8 or 9, wherein the electrical component (54) is at least one of an electrical mechanical actuator and electrohydraulic actuator.

11. The system according to claim 8, 9 or 10, wherein the battery (10) is susceptible to arcing at the second pressure without the neutral tap (12).

12. The system according to claim 8, 9, 10 or 11, wherein the neutral tap is grounded.

13. The system according to any of claims 8 to 12, comprising an enclosure configured to provide a ground, the ground being electrically connected to the neutral tap, and wherein the enclosure (18) and electrical component (54) are grounded.

14. A method of supplying DC voltage with a battery comprising:
providing a battery (10) having positive and negative terminals (14, 16) corresponding to a voltage; and
center-tapping the battery between the positive and negative terminals to provide a neutral corresponding to a ground, the voltage corresponding to the relative voltage between the positive and negative terminals.

15. The method according to claim 13, wherein the battery (10) is exposed to first and second pressures, the second pressure being less than the first pressure, wherein the battery is susceptible to arcing at the second pressure without the center-tap; preferably wherein the second pressure corresponds to a pressure at approximately 80,000-90,000 feet (24 - 27 km) altitude.
